Europäisches Patentamt

(19) **European Patent Office**

**Office européen des brevets**

(11) Publication number: **0 016 426**
**B1**

(12) **EUROPEAN PATENT SPECIFICATION**

(45) Date of publication of patent specification: **08.08.84**

(51) Int. Cl.³: **H 04 Q 11/04, H 04 Q 3/54**

(21) Application number: **80101327.7**

(22) Date of filing: **14.03.80**

(54) **Digital telephone exchange.**

(30) Priority: **15.03.79 IT 6754479**

(43) Date of publication of application:
**01.10.80 Bulletin 80/20**

(45) Publication of the grant of the patent:
**08.08.84 Bulletin 84/32**

(84) Designated Contracting States:
**DE FR GB NL SE**

(56) References cited:
**DE - A - 2 621 603**
**FR - A - 2 353 193**
**FR - A - 2 371 841**
**FR - A - 2 382 819**
**GB - A - 1 300 421**
**GB - A - 2 016 865**

**POST OFFICE ELECTRICAL ENGINEERS
JOURNAL, vol. 71, January 1979, pages 221-
224 London, G.B. J. MARTIN: "System X"**

(73) Proprietor: **CSELT Centro Studi e Laboratori
Telecomunicazioni S.p.A.
Via Guglielmo Reiss Romoli, 274
I-10148 Turin (IT)**

(72) Inventor: **Viale, Ernesto
Via Viberti, 4
Torino (IT)**

(74) Representative: **Riederer Freiherr von Paar zu
Schönau, Anton et al,
Freyung 615 Postfach 2664
D-8300 Landshut (DE)**

Courier Press, Leamington Spa, England.

**0 016 426**

(56) References cited:
INTERNATIONAL SWITCHING SYMPOSIUM,
25th-29th October 1976, pages 421-4-1 to 421-
4-8 Kyoto, JP. BOURBAO et al.: "New
Developments in E10 digital switching system"
EUROCON '77 - CONFERENCE PROCEEDINGS
ON COMMUNICATIONS, 3rd-7th May 1977,
pages 3.5.4.1 - 3.5.4.6 Venetia. IT
MONTEMURRO: "Distributed Microprocessor
stored program control in a switching network"
IEEE TRANSACTIONS ON COMMUNICATIONS
vol. COM-27, no. 7, July 1979, pages 1088-
1095 New York, U.S.A. OKADA et al.:
"Microprocessor Application to Telephone
Terminal Switching System Architecture"
INTERNATIONAL CONFERENCE ON PRIVATE
ELECTRONIC SWITCHING SYSTEMS 10th-12th
April 1978, pages 194-199 London, G.B. RAAB:
"A new system architecture, modular in
hardware and software. The basis of analog and
digital PABX systems"
Congrès AFCET-Théorie et technique de
l'Informatique, 13-15 November 1978, pages
116-123
International Switching Symposium (ISS'76),
25-29 October 1976, pages 223-3-1 to 223-3-8

## Description

The invention relates to a digital telephone exchange consisting of a PCM-connection network for switching connections among subscribers' circuits linked to subscribers belonging to the same exchange or to connections to a higher hierarchy centre via PCM groups, the subscribers' circuits each being connected to the connection network via a PCM speech channel, and being connected for signalling transmission in PCM code to the connection network, and of a plurality of control units controlling the development of telephone connections and each communicating with any of the subscribers' circuits and with the other ones of the control units by utilizing as connection path the connection network, examining and satisfying in allotted time phases the interconnect request received from the subscribers' circuits and the other control units, the control units carrying out functions concerning the control of the connection among the subscribers wherein the single control unit controls a limited portion of the traffic generated by the subscribers, and being each connected to the connection network via a synchronous PCM channel transmitting information and being at the disposal, for carrying out its function or functions, of all the subscribers' circuits connected to one connection network stage.

Particularly telephone exchanges intended for low subscribers' density areas have to meet specific requirements; more particularly, even if the wanted capacity is not to be so high though the area to which the connected subscribers belong may be wide, a high reliability degree of the equipments is essential to ensure a high service quality. If such exchanges are not assisted by skilled personnel, means must be provided to cope with one or more failures in the best possible way.

In such cases a temporary service degradation, that is a reduction in the number of contemporaneous calls, is admissible, but the possibility of a complete interruption is to be avoided. In addition, the intervention of skilled personnel for failure repair is to be avoided as far as possible. The present trend is towards making the intervention less probable and delayed in time, that is towards ameliorating the exchange reliability. The time that may elapse between an intervention and the next has been taken just as one of the parameters that can define the reliability degree of a system, representing the interval between two subsequent conditions of serious equipment failure.

In case of a digital exchange, the part requiring higher reliability is of course the one controlling the time development of the subscribers' interconnections. In fact, if a failure occurs in this section, very serious consequences are possible in the traffic control, that may result in a complete traffic interruption.

Several arrangements are known wherein each subscriber's circuit is connected to the connection network via a PCM signalling channel particularly assigned to the subscriber's circuit. It is particularly known (ISS'76, 25—29 October, pages 223-3-1 to 223-3-8) to extract the signalling by means of a transmission switching interface at the input of the connection network while certain signalling information is switched through the connection network. It is further known (DE—A 2 621 603) to use on a connection between a subscriber station and an exchange a signalling block consisting of at least two words for the information to be transmitted and one word for signalling which latter word is extracted from the connection before the connection network.

For providing for a small exchange which can later easily be extended, it has become known (FR—A 2 353 193 = DE—A 27 23 138) to use a subdivided connection network and control processors each assigned to part of the subscribers belonging to the exchange, the control processors and the subscribers' circuits communicating with each other via multiplexers and concentrators by way of the exchange network which consists of blocks of time slot converters. Each of the parts of the exchange carries out a particular function, the control processors carrying out their function for a particular portion of the exchange, e.g. scanning particular subscribers' circuit, generating tones for one or several circuits etc. The structure is thus composed of a plurality of processors which co-operate in call management. For the mutual information traffic, semifixed channels of a multiframe PCM carrier are used, some limitations of traffic arising from the adopted space limitation.

The exchange of the invention which also allows later extension by combining several ones thereof, is characterized in that each of the subscribers' circuits is connected to the connection network by two synchronous time slots per TDM frame, one of said slots constituting said PCM speech channel and the other a PCM signalling channel particularly assigned to the subscriber's circuit and having the same bit transmission rate as said speech channel, said signalling channel being switched via said connection network between the subscriber's circuit and any of said control units. Such separate signalling channel for each subscriber circuit allows a more abounding signalling to be exchanged with the control unit. The allotment of a channel to every subscriber is not very expensive, particularly if areas of low density are involved.

The use of several control units of one kind or each kind provides for some redundancy with the consequence that if one of these several control units which carry out their functions in sequence will fail, the other ones continue the service though altogether on a reduced scale.

Every control unit carries out its own function limited not with respect to a portion of the subscribers' circuits but limited to the control of a portion of the telephone call management, without the intervention of other control units. Preferably, the control units as well as the subscribers' circuits are connected to the connection network via a 64 kbit/s channel each, set up only for the time necessary to the packet information interchange between the units.

Such an exchange presents a great versatility as to what concerns the possibility of increasing the number of subscribers to be serviced, as it does not require modifications of the control programs of the control unit, but only the addition of individual circuits equal to the already existing ones.

These and other characteristics of the present invention will become clearer from the following description of a preferred embodiment thereof given by way of example and not in a limiting sense, taken in connection with the annexed drawings, in which:

— Fig. 1 is a block diagram of a digital exchange according to the present invention;

— Fig. 2 is a detailed block diagram of blocks denoted by OC1, . . ., OCn in Fig. 1.

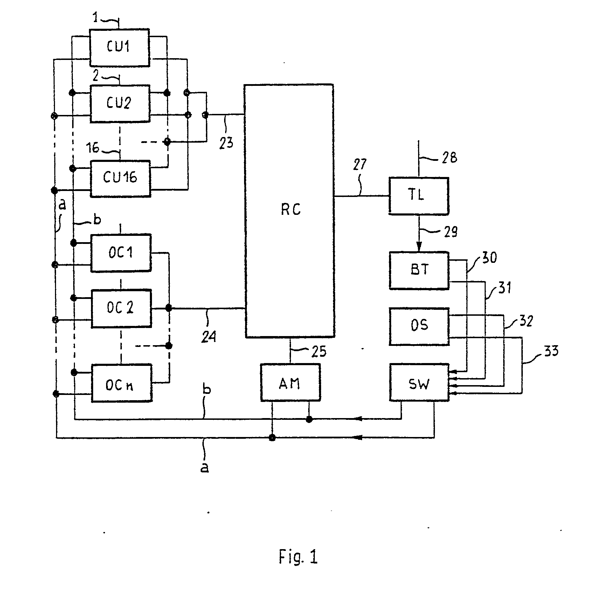

In Fig. 1 references 1, 2, . . . 16 denote groups of lines coming from the subscriber's sets, connected with the same number of subscribers' circuits CU1, CU2, . . . CU16, in which the speech signal and the signalling are coded in PCM at 64 kbit/s.

At the subscriber's circuit outputs, wires 21 and 22 respectively devoted to sixteen signalling channels of associated type and sixteen speech channels are joined in wire 23, passing to a PCM group at 2 Mbit/s (2·16·64 kbit/s).

On separate time control wires a and b there are present synchronism signals at 125 μs and timing signals at 2 MHz. These signals are used to allow the CUs to insert into 32 PCM channels (wire 23) the speech and signalling patterns in phase with the time slots of the channels allotted to each of them.

The connection between subscribers belonging to the same exchange or with subscribers belonging to other exchanges occurs through a normal connection network RC between PCM lines. It can advantageously consist of an overall accessibility single stage of the time type. To make the description easier reference will be made hereinafter to an exchange for an area with low subscribers' density and then the subscribers to be serviced are supposed to be in the order of hundreds.

In this case, the connection network RC is not expensive, owing to the limited capacity required. In addition to PCM lines coming from subscribers' circuits, the connection network RC provides accesses for control units OC1, OC2, . . . OCn by means of a PCM line 24, still at 2 Mbit/s; the structure of these units will be described with more details hereinafter. There are still lines operating at 64 kbit/s, joined into a group denoted by 25 in Fig. 1. These lines arrive from a usual addressing unit for the connection network, denoted by AM and made according to a structure equal to that of the control units.

The number of lines forming the group 25 is equal to the number of control units in order to allow the interconnection of each unit with whatever unit or subscriber through the respective subscriber's circuit.

To the connection network there is still connected a conventional line terminal TL, able to extract timing and synchronism signals from PCM bidirectional connection 28 operating at 2 Mbit/s and coming from the higher hierarchy switching centre; this PCM connection through TL arrives at the connection network RC. The time information obtained by TL is transferred by means of wire 29 to a usual time-base BT, that, through suitable operations of divisions and processing of the pulse format, supplies timing and synchronism signals on wires 30 and 31.

If TL does not supply the time information on wire 29, there is the intervention of a local oscillator OS, that independently generates timing and synchronism signals on wires 32 and 33. Of course these signals are not synchronized with those of the higher hierarchy centre, but are sufficient for the usual control of local traffic. A usual switch SW can independently recognize the absence of the signals supplied by BT and then draw said signals from OS in order to transfer them to wires a and b connected with the other blocks of the exchange.

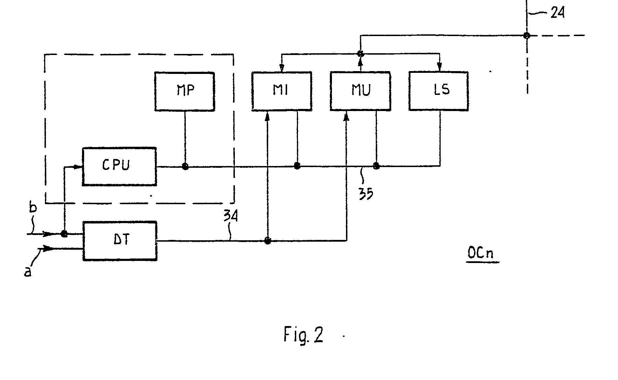

Fig. 2 shows one of the control units in a more detailed block diagram, generically denoted by OCn. Reference CPU denotes a central processing unit, advantageously of the type contained in a single integrated circuit in order to limit as much as possible the encumbrance and the cost of each unit. Such processing units are nowadays easy to find and are well known to the skilled in the art.

Reference MP denotes a usual memory unit designed to store both the control programs of the control unit and data concerning the various phases of the telephone connection. For a reasonable number of subscribers served at the same time by each unit, for instance from 4 to 8, this memory unit must have a storage capacity of about 3 or 2 k-bytes. This value may be found in the memory units contained in the same chip where the CPU is located. Reference MI and MU denote two read and write memory units, able to store a predetermined number of PCM frames belonging to one or to a plurality of channels at 64 kbit/s.

These frames are relevant to words arriving from other control units or from subscribers' circuits, as to what concerns memory unit MI devoted to store incoming data extracted from channels at 64 kbit/s, or arriving from the same CPU, as to what concerns memory unit MU devoted to store the data to be transferred towards the outside inserting them into PCM frames at 64 kbit/s.

Reference LS denotes a specialized logic circuit for the specific functions carried out by the type of control unit where it is placed. For instance LS can be a logic circuit able to recognize the digits dialled in multi-frequency code on a keyboard telephone set.

Memory units MI and MU, as well as specialized logic circuit LS, are connected with CPU through a bus 35, while MP connection can be already effected during the integration process of CPU and MP on the same chip. The inputs of MI and LS and the output of MU are inserted as channels at 64 kbit/s onto a single line PCM at 2 Mbit/s, denoted in the drawing by 24. It corresponds to the PCM line denoted by the same number in Fig. 1. Always in Fig. 2, reference DT denotes a usual time base that receives on wires a and b synchronism and timing signals and processes them so as to obtain the suitable signals for memory units MI and MU. These signals are sent to MI and MU by means of wire 34.

The blocks MI and MU are interface circuits, used to insert the four signalling and speech channels of an OC into synchronous PCM channels allotted to it.

The timing signal present on wire b accesses also CPU, without preprocessing effected by DT.

The single units differ from one another solely in the program stored in the memory unit MP and in the type of specialized logic LS. This latter in some control units can also be absent. The number of equal units, even in the program, depends of course on the traffic controlled by the exchange and on the specific function of the unit.

Now the functions to be carried out by the control units within a telephone connection are to be examined.

The most important functions are the following:

a) detection of the seizure request sent by the calling subscriber;

b) making of the connection (storage of the dialling);

c) search for the path to be followed to reach the called subscriber;

d) check of the path chosen for the conversation;

e) call charge;

f) interchange of information, both permanent and temporary information on the subscriber and on the connection;

g) control of the exchange and information interchange with the higher hierarchy centre;

h) emission of instructions for time signals of the connection network, that are necessary to effect the connection.

These functions can be grouped into homogeneous groups and allotted to the control units as follows:

— functions a) and b) to the first type of unit OC1;

— functions d) and e) to the second type of unit OC2;

— functions c) and f) to the third type of unit OC3;

— function g) to the fourth type of unit OC4;

— function h) to the fifth type of unit AM.

Now the way will be examined in which the various control units OC1, . . ., OCn and AM connected with the connection network utilize that same network to communicate with one another.

Each unit communicates with the others by means of a message characterized by a label of "message start" followed by a variable number of words, containing the information to be transmitted.

The commands and the information transferred from and to the subscriber are on the contrary contained in a single word representing the subscriber's state.

As already seen, units and subscribers access the connection network RC by means of channels at 64 kbit/s inserted into groups at 2 Mbit/s; more particularly each subscriber is allotted a channel at 64 kbit/s for the speech and one at equal rate for the signalling.

On the signalling channel, one for each subscriber, the following information is sent on the transmission side:

— current in one of the wires of the telephone line;

— current on the other wire;

— subscriber's circuit in service;

— cut-off subscriber's circuit.

While the following information is sent on the reception side:

— line scanning command;

— command to put in service the subscriber's circuit;

— command to send the call current;

— charge command;

— command to cut-off the subscriber's circuit.

Each subscriber is therefore able to signal, through the connection network, its state to any unit connected with the network by means of a switching operation effected by the interested unit and to receive the commands in an analogous way.

To each unit a plurality of channels at 64 kbit/s are allotted. These channels can be utilized according to the time phase of the connection to send the request for connections with other units and the commands towards the subscribers, to effect the check of the subscribers' state and the information interchange with other units.

The first type, unit OC1, on the basis of the functions carried out, is allotted;

— a communication channel with block AM to control the switching operations;

— a channel to scan the state of each subscriber's circuit and to control its activation;

— a channel to communicate with other units;

— a channel to request the connection with other units;

— a channel to communicate with the subscriber's circuit in the phase of the setting up of the connection.

The second type, unit OC2, is allotted:

— a channel to communicate with AM for switching control;

— a channel to effect the request for connection with other units;

— a channel to communicate with the other units;

— a channel on which the communication with the subscriber's circuit is effected in the conversation phase of the connection.

The third type, unit OC3, is allotted:

— a channel to communicate with AM for switching control;

— a channel to communicate with other units;

— a channel to effect the connection request with other units.

The fourth type, unit OC4, is allotted:

— a channel to communicate with other units;

— a signalling channel towards the centre of higher hierarchy;

— a channel to send the connection request with other units.

Finally the fifth type, unit AM, is allotted a channel per each unit able to effect the switching operations.

As shown, each unit is allotted a channel to effect the connection request with other units (communication channel with AM). This channel is scanned, in different time slots, by the units that can be connected with it. For instance, OC1 is seen by OC2 in a first time slot and by OC3 in a second time slot and in following time slots by the other units that can communicate with it. The request for connection is effected by a word characteristic for each type of unit desired and remains until the moment in which it is serviced.

Now it will be examined how a connection between data channels of units OC1 and OC2 can be established. The requesting unit OC1 sets a request pattern on the request channel. The wanted unit OC2 explores cyclically all request channels, establishing the connection through RC via AM. If a request pattern is recognized, a connection between the communication channels of OC1 and OC2 is established by a command sent via AM. At this point the message communication between the connected units initiates, beginning from a message of "completed connection". In this way OC1 can delete the request and initiate the actual communication.

At the end of the information interchange, the unit that has effected the request stops the communication by a message of "stop" that the request unit interprets as connection release.

Now OC1 can effect other requests and OC2 can examine the request channels of other units. To avoid collisions during the cyclical exploration of request channels, different time phases are allotted to each unit.

The time interval, elapsing between two subsequent examinations of the same request channel, is determined by the time necessary to satisfy a request, while of course the time interval elapsing between two examinations of the same request channel made by a unit is a function of the number of present units.

Now the operation of the various sections of the exchange will be examined in case of a usual telephone call.

OC1 examines the "seizure request" made by the subscribers (function a), cyclically connecting itself with them though the connecting path that AM supplies upon the request made by the unit itself; when it detects one, it stops, remaining connected with the calling subscriber during the time necessary to satisfy the request.

More particularly the dial tone and the power supply are sent immediately. The time necessary to satisfy the request must be equal to the time taken by the other units to examine the states of all the subscribers, so as to prevent another unit of the same type from stopping on the same subscriber. Now the calling party can dial the wanted telephone number, that is recognized by the same unit (function b) as result of the dialling and is transferred to unit OC3 that looks for the path to follow to reach the called subscriber (function c), to supply possible information necessary to the connection (function f) and to inform OC1 on the result of the path search.

If that denotes that the called subscriber is connected with the same exchange, OC1 connects itself with OC2 and transfers all the instructions concerning the connection that OC2 is going to control during the whole conversation phase. More particularly the time intervals will be taken into account to charge purposes (function e), the release operation will be recognized, etc. If the result of the search denotes that the called subscriber does not belong to the same exchange, OC1 requires the intervention of OC4, that controls the connection with the higher hierarchy centre according to a standardized procedure (function g).

The messages exchanged among the control units are formed by a word of "start of message", one of "identification of the unit" sending the message, followed by a varying number of words containing the information object of the communication.

Finally there is a word of "end of message" with functions of check of the correctness of the message itself.

**Claims**

1. Digital telephone exchange consisting of a PCM-connection network (RC) for switching connections among subscribers' circuits (CU1, CU2, ...) linked to subscribers belonging to the same exchange or to connections to a higher hierarchy centre via PCM groups (28), the subscribers' circuits (CU1, CU2, ...) each being connected to the connection network (RC) via a PCM speech channel, and being connected for signalling transmission in PCM code to the connection network (RC), and of a plurality of control units (OC1, . . ., OCn) controlling the development of telephone connections and each communicating with any of the subscribers' circuits and with the other ones of the control units by utilizing as connection path the connection network (RC), examining and satisfying in allotted time phases the interconnect request received from the subscribers' circuits and the other control units, the control units carrying out functions concerning the control of the connection among the subscribers wherein the single control unit controls a limited portion of the traffic generated by the subscribers, and being each connected to the connection network (RC) via a synchronous PCM channel transmitting information and being at the disposal, for carrying out its function or functions, of all of the subscribers' circuits (CU1, CU2, . . .) connected to one connection network stage (RC), characterized in that each of the subscribers' circuits (CU) is connected to the connection network (RC) by two synchronous time slots per TDM frame, one of said slots constituting said PCM speech channel and the other a PCM signalling channel particularly assigned to the subscriber's circuit and having the same bit transmission rate as said speech channel, said signalling channel being switched via said connection network between the subscriber's circuit and any of said control units (OC1, . . . OCn).

2. Digital telephone exchange as in claim 1, characterized in that each of the subscribers' circuits (CU) is connected to the connection network (RC) via two out of 32 PCM channels per TDM frame.

3. Digital telephone exchange as in claim 1 or 2, wherein the control units (OC1, . . ., OCn) are provided in different types each performing particular functions, characterized in that several control units (OC1, . . ., OCn) of the same type are provided.

4. Digital telephone exchange as in any of claims 1 to 3, characterized in that said control units (OC1, . . ., OCn) consist of a central processing unit (CPU), of a first data and program memory unit (MP), of a synchronism and timing signal processing unit (DT), of a second memory unit (MI) able to extract and store PCM frames belonging to one or more channels coming from other units or subscribers and further of a third memory unit (MU) able to store and insert into a PCM group one or more channels intended for other control units or subscribers; characterized also in that said second (MI) and third (MU) memory units extract time information from said synchronism and timing signal processing unit (DT) and are connected, in conjunction with said first memory unit (MP), with said central processing unit (CPU) through a bus (35).

5. Digital telephone exchange as in claim 4, characterized in that said control units (OC1, . . ., OCn) comprise a specialized logic (LS) capable of recognizing by decoding and of coding signalling information in particular codes; in addition characterized in that said specialized logic (LS) is connected with said central processing unit (CPU) by said bus (35).

6. Digital telephone exchange as in any of claims 1 to 5, characterized in that a plurality of control units (OC1, . . ., OCn) having different tasks are coupled to the connection network (RC) via one line (24) which carries a corresponding plurality of channels.

## Patentansprüche

1. Digitale Fernsprechvermittlungsanlage aus einem PCM-Koppelnetz (RC) zum Schalten von Verbindungen zwischen Teilnehmerschaltungen (CU1, CU2,...), die mit zur selben Vermittlungsanlage gehörenden Teilnehmern oder mit Verbindungen zu einer höherrangigen Zentrale über PCM-Bündel (28) verbunden sind, jeweils mit dem Koppelnetz (RC) über einen PCM-Sprechkanal verbunden sind und zur Übertragung von Schaltkennzeichen im PCM-Kode verbunden sind, und asu einer Mehrzahl von Steuereinheiten (OC1, . . ., OCn), die die Entwicklung der Fernsprechverbindungen steuern und jeweils mit irgend einer der Teilnehmerschaltungen und mit den anderen der Steuereinheiten unter Verwendung des Koppelnetzes (RC) als Verbindungspfad kommunizieren, in zugeordneten Zeitphasen die von den Teilnehmerschaltungen und den anderen Steuereinheiten empfangenen Verbindungsanforderungen prüfen und zufriedenstellen, die Steuerung und die Verbindung unter den Teilnehmern betreffende Funktionen ausführen, wobei die einzelne Steuereinheit einen begrenzten Anteil des von den Teilnehmern erzeugten Verkehrs steuert, und jeweils über einen synchronen PCM-Kanal mit dem Koppelnetz (RC) verbunden sind, der Information überträgt, und sämtlichen mit dem Koppelnetz (RC) verbundenen Teilnehmerschaltungen (CU1, CU2, . . .) zur Durchführung ihrer Funktion oder Funktionen zur Verfügung stehen, dadurch gekennzeichnet, daß jede der Teilnehmerschaltungen (CU) mit dem Koppelnetz (RC) über zwei synchrone Zeitlagen je TDM-Rahmen verbunden ist, von denen eine Zeitlage den PCM-Sprechkanal und die andere Zeitlage einen PCM-Schaltkennzeichenkanal, der speziell der Teilnehmerschaltung zugeordnet ist und die selbe Bitübertragungsrate wie der Sprechkanal aufweist, aufnimmt, wobei der Schaltkennzeichenkanal über das Koppelnetz zwischen der Teilnehmerschaltung und einer der Steuereinheiten (OC1, . . ., OCn) geschaltet wird.

2. Digitale Fernsprechvermittlungsanlage nach Anspruch 1, dadurch gekennzeichnet, daß jede der Teilnehmerschaltungen (CU) mit dem Koppelnetz (RC) über zwei von 32 PCM-Kanälen je TDM-Rahmen verbunden ist.

3. Digitale Fernsprechvermittlungsanlage nach Anspruch 1 oder 2, bei der die Steuereinheiten (OC1, ..., OCn) in verschiedenen Typen vorhanden sind, von denen jeder bestimmte Funktionen ausführt, dadurch gekennzeichnet, daß mehrere Steuereinheiten (OC1, ..., OCn) des gleichen Typs vorhanden sind.

4. Digitale Fernsprechvermittlungsanlage nach einem der Ansprüche 1 bis 3, dadurch gekennzeichnet, daß die Steuereinheiten (OC1, ..., OCn) aus einer zentralen Verarbeitungseinheit (CPU), einer ersten Daten- und Programmspeichereinheit (MP), einer ein Synchronismus- und ein Zeitsteuersignal verarbeitenden Einheit (DT), einer zweiten Speichereinheit (MI), die PCM-Rahmen, welche zu einem oder mehreren von den anderen Einheiten oder Teilnehmern kommenden Kanälen gehören, extrahieren und speichern kann, und weiterhin aus einer dritten Speichereinheit (MU), die in ein PCM-Bündel einen oder mehrere für andere Steuereinheiten oder Teilnehmer bestimmte Kanäle einfügen kann, bestehen; und dadurch gekennzeichnet, daß die zweite Speichereinheit (MI) und die dritte Speichereinheit (MU) eine Zeitinformation aus der das Synchronismus- und Zeitsteuersignal verarbeitenden Einheit (DT) extrahieren und zusammen mit der ersten Speichereinheit (MP) mit der zentralen Verarbeitungseinheit (CPU) über eine Sammelleitung (35) verbunden sind.

5. Digitale Fernsprechvermittlungsanlage nach Anspruch 4, dadurch gekennzeichnet, daß die Steuereinheit (OC1, ..., OCn) eine spezialisierte Logik (LS) aufweisen, die Schaltkennzeichen-Information in speziellen Kodes durch Dekodieren erkennt und sie in diesen Kodes kodiert; und daß die spezialisierte Logik (LS) mit der zentralen Verarbeitungseinheit (CPU) über die Sammelleitung (35) verbunden ist.

6. Digitale Fernsprechvermittlungsanlage nach einem der Ansprüche 1 bis 5, dadurch gekennzeichnet, daß mit dem Koppelnetz (RC) eine Vielzahl von Steuereinheiten (OC1, ..., OCn) mit unterschiedlichen Aufgaben über eine Leitung (24), die eine entsprechende Vielzahl von Kanälen führt, gekoppelt ist.

**Revendications**

1. Autocommutateur téléphonique numérique, qui comprend soit un réseau de connexion MIC (RC) pour commuter les circuits d'abonné (CU1, CU2, ...) entre des abonnés qui appartiennent au même autocommutateur ou entre des connexions avec un centre supérieur sur des faisceaux MIC (28), chacun des circuits d'abonné (CU1, CU2, ...) étant connecté au réseau de connexion (RC) à travers une voie de phonie en MIC et étant connecté pour la transmission de la signalisation en code MIC au réseau de connexion (RC), soit une pluralité des dispositifs de commande (OC1, ..., OCn) aptes à superviser le déroulement des connexions téléphoniques, chaque dispositif communiquant avec des circuits d'abonné et avec d'autres dispositifs de commande en utilisant comme voie de connexion le réseau de connexion (RC), examinant et satisfaisant dans les phases de temps assignées les demandes d'interconnexion reçues des circuits d'abonné et des autres dispositifs de commande, lesdits dispositifs de commande accomplissant des fonctions relatives au contrôle de la connexion entre les abonnés, où un seul dispositif de commande supervise une partie limitée du trafic engendré par les abonnés, et étant chacun connecté au réseau de connexion (RC) à travers la voie synchrone MIC qui transmet les informations et étant à disposition, pour accomplir sa fonction ou ses fonctions, de tous les circuits d'abonné (CU1, CU2, ...) connectés à une étage du réseau de connexion (RC), caractérisé en ce que chaque circuit d'abonné (CU) est connecté au réseau de connexion (RC) pendant deux intervalles de temps pour chaque trame MRT (multiplexage par répartition dans le temps), l'un desdits intervalles de temps composant ladite voie de phonie en MIC et l'autre une voie de signalisation en MIC, assignée en particulier au circuit d'abonné et ayant le même débit binaire de transmission que la dite voie de phonie ladite voie de signalisation étant commutée à travers ledit réseau de connexion entre le circuit d'abonné et l'un quelconque desdits dispositifs de commande (OC1, ..., OCn).

2. Autocommutateur téléphonique numérique selon la revendication 1, caractérisé en ce que chacun des circuits d'abonné (CU) est connecté au réseau de connexion (RC) à travers deux des 32 voies MIC pour chaque trame MRT.

3. Autocommutateur téléphonique numérique selon la revendication 1 ou 2, oú l'on emploie des dispositifs de commande (OC1, ..., OCn) de genre différent, dont chacun accomplit des fonctions particulières, caractérisé en ce qu'il y a aussi plusieurs dispositifs de commande (OC1, ..., OCn) du même genre.

4. Autocommutateur téléphonique numérique selon une quelconque des revendications de 1 à 3, caractérisé en ce que lesdits dispositifs de commande (OC1, ..., OCn) sont constitués d'une unité centrale de traitement (CPU), d'une première unité de mémoire pour données et programmes (MP), d'une unité de traitement des signaux de synchronisation et de rythme (DT), d'une deuxième unité de mémoire (MI) capable d'extraire et mémoriser des trames MIC appartenant à une ou à plusieurs voies provenant d'autres dispositifs ou abonnés et encore d'un troisième unité de mémoire (MU) capable de mémoriser et insérer dans un faisceau MIC une ou plusieurs voies destinées à d'autres dispositifs ou abonnés; caractérisé aussi en ce que lesdites deuxième (MI) et troisième (MU) unités extraient des informations de temps de ladite unité de traitement de signaux de synchronisation et de rythme (DT) et sont connectées, ainsi que ladite première unité (MP), à ladite unité centrale de traitement (CPU) au moyen d'une connexion multiple bidirectionelle (35).

5. Autocommutateur téléphonique numérique selon la revendication 4, caractérisé en ce que ces dispositifs de commande (OC1,..., OCn) comprennent une logique spécialisée (LS) capable de reconnaître au moyen d'un décodage et de coder des informations de signalisation dans des codes particuliers; caractérisé en outre par le fait que ladite logique spécialisée (LS) est connectée, à ladite unité centrale de traitement (CPU) au moyen de ladite connexion multiple bidirectionnelle (35).

6. Autocommutateur téléphonique numérique selon une quelconque des revendications de 1 à 5, caractérisé en ce qu'une pluralité des dispositifs de commande (OC1, ..., OCn) ayant des fonctions différentes à accomplir sont connectés au réseau de connexion (RC) à travers une ligne (24) qui transporte une pluralité correspondante de voies.

Fig. 1

Fig. 2